# EUROPEAN PATENT SPECIFICATION

(11) **EP 1 076 985 B1**
(45) Date of publication and mention of the grant of the patent: **20.03.2002**
(21) Application number: 99922174.0
(22) Date of filing: 05.05.1999
(51) Int. Cl.: H04M 3/50, H04M 15/08

(54) **A COMMUNICATION SYSTEM FOR DISTRIBUTING INFORMATION**
KOMMUNIKATIONSSYSTEM ZUR INFORMATIONSVERTEILUNG
SYSTEME DE COMMUNICATION PERMETTANT DE TRANSMETTRE DES INFORMATIONS

(30) Priority: 13.05.1998 IT TO980403
(43) Date of publication of application: 21.02.2001
(73) Proprietor: Peretti, Giulio, 10153 Torino (IT)
(72) Inventor: Peretti, Giulio, 10153 Torino (IT)
(74) Representative: Quinterno, Giuseppe
(86) International application number: EP9903055
(87) International publication number: WO9959318

(56) References cited:
- EP-A- 0 526 788
- FR-A- 2 588 436
- FR-A- 2 736 234
- US-A- 4 389 546

## Description

The present invention relates to communication systems for distributing information.

European Patent Application EP-A-0 526 788 discloses a system for the provision of information by telephone, using a comparatively large capacity semiconductor memory with a fast access time as the memory medium. The system can respond to calls for information on more than one telephone line at the same time.

French Patent Application FR-A-2 736 234 describes a method for providing local information by means of a vocal server accessible through the telephone network. The user dials an accession call number and the telephone system detects the geographical region where the call is coming from in order to select an information file corresponding to that region. The thus selected information are transmitted to the calling user through the return circuit of the telephone connection established by the user.

U.S. Patent No. 4,389,545 discloses an automatic message, time and temperature announcement system wherein loading of digitised speech signals and controls may be accomplished remotely through a data link from a standard voice grade telephone line. The user of such a system is a subscriber institution which wishes to provide a public service to an incoming caller. A count of the number of calls received is kept for use in billing subscribers.

French Patent Application FR-A-2 588 436 discloses a system for the emission of audio/video messages, which can be accessed by a telephone call.

The invention has been developed with particular attention to the need to facilitate the distribution of information, for example, by small entities such as independent producers in the publishing field, including music publishing, voluntary (so-called non-profit-making) organizations, or simply private individuals.

Recent developments in information technology have facilitated the activities of such entities in many ways: it suffices to consider, for example, how the technology generally known as "desktop publishing" overcomes some of the intrinsic difficulties connected with conventional printing techniques which, in order to be advantageous from an economic point of view, usually require very large print runs. Substantially similar considerations apply, for example, to music publishing, particularly with regard to compact-disc production technology, both in relation to the sound-recording substrate and in relation to packaging and, in particular, to the accompanying leaflets, with the overcoming, once and for all, of the limitations of scale conventionally connected with the production of vinyl records.

There are, however, still serious problems for operators of the type specified above at the level of the distribution of information to the public, particularly with regard to the ability to advertize the nature and the content of their activities. This applies particularly to access to conventional radio and television broadcasting communication means, and also in consideration of the situation with regard to standards in this field.

Even the spread of information networks such as the Internet does not provide a wholly satisfactory solution to problems of this type. The setting-up, maintenance and up-dating of a web site on the Internet in fact requires quite significant investment. In any case, at least in the situation of use which prevails at the moment, access to a web site on the Internet is not completely free since it requires the person accessing the site to pay the corresponding connection charge to his provider.

The object of the present invention is to provide a communication system for distributing information which can overcome the problems defined above by an intrinsically simple solution which can take full advantage of technological solutions in current and widespread use.

According to the present invention, this object is achieved by means of a communication system having the specific characteristics recited in the following claims.

Basically, the solution according to the invention benefits from the simultaneous existence of:
- information technology (typically based on personal computers) which enables information databases of the type generally known as multimedia databases (written text, graphical information, possibly animated, sound information, both at the level of spoken messages and at the level of musical programmes) to be produced at limited cost, and
- the established technology currently used in telephone networks, which enables the cost of the call to be charged to the subscriber called rather than to the calling subscriber; in other words, this is the solution adopted for the services currently known in Italy by the trade name of "Numero Verde" ("Green Number", that is, "Freephone numbers").

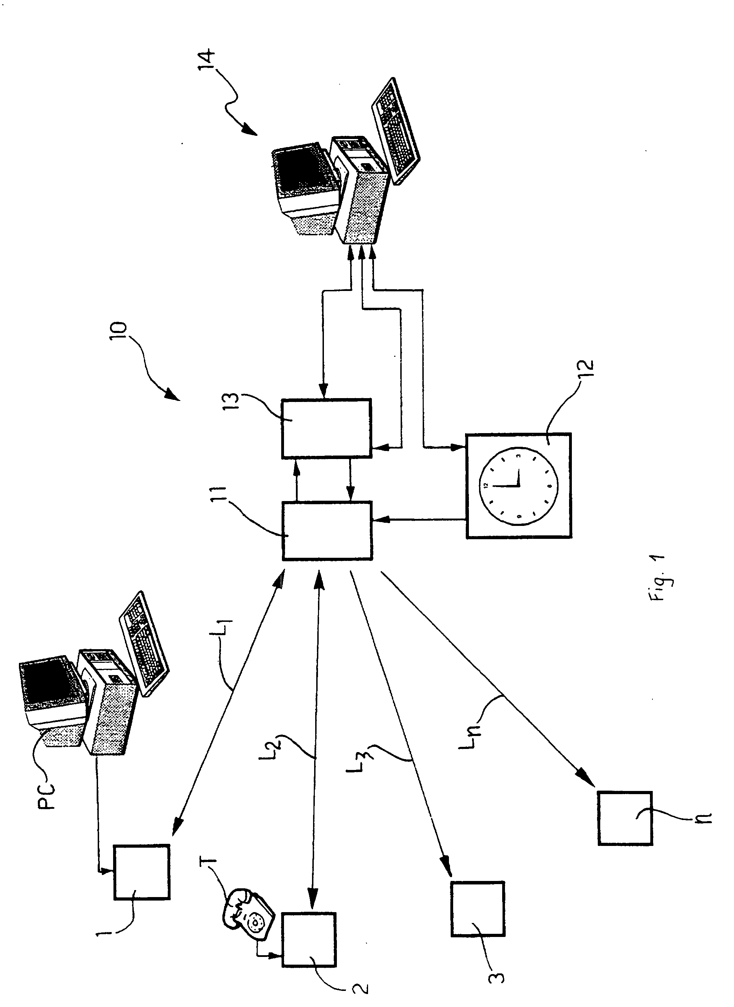

The invention will now be described, purely by way of nonlimiting example, with reference to the appended drawing which shows, in the form of a block diagram, the architecture of a system according to the invention.

The diagram of the appended drawing shows a plurality of users, indicated 1, 2, ..., n which can be connected to an information distribution system, generally indicated 10.

Connection between the users 1, ..., n and the system 10 is achieved in accordance with the normal connection criteria usable on a communication network, this term being used herein in its most general sense.

The respective lines L1, L2, ..., Ln used for the connection may therefore be - in the most typical embodiment of the invention - normal lines of a telephone network, either conventional lines or advanced lines (for example, ISDN lines).

Connection between the various users 1, ...n and the system 10 can thus be achieved in various ways, according to the communication facilities available to the individual user.

Connections to the system 10 can therefore be made both by so-called "advanced" users, who have available, for example, a personal computer PC (or a substantially similar device such as, for example a Minitel terminal) which communicates with the system 10 by means of a data line, and by users who simply have a telephone T.

Clearly, however, the type and quality of the information which individual users can receive from the system 10 depends on their communication facilities.

An important characteristic of the system 10 according to the invention is the presence of a network interface 11 (of known type which does not therefore need to be described in detail herein) which can control the calls of the various users 1, 2, ...n in accordance with methods typical for calls charged to the party called (and not, as is more usual, to the calling party). For example, this may be an interface of the type used to control the service currently known in Italy as "Numero Verde" ("Green Number", that is, "Freephone numbers") in telephone networks.

In the system 10 according to the invention, the network interface 11 has an associated timing module 12 which can perform at least one of the following functions:
- disconnecting the line, interrupting the call, when a selectively predetermined call duration is exceeded, and/or
- possibly activating the system 10 during selectively predetermined time bands.

Naturally, the timing module 12 may be implemented at software level. In particular, this permits considerable flexibility in controlling call times, for example, for running games or competitions.

The aforementioned functions clearly have the purpose of limiting the cost of running the system 10 (the manager of which bears the cost of incoming calls). However, the timing function may also adopt an important role in various situations, for example, when the information supplied to calling users comprises the reproduction of a musical excerpt or animated graphics which the manager of the system 10 wishes to advertize at demonstration level (for example, in order to promote the sale of the complete work on CD, DVD, video cassette or other substrates). In other words, the limitation of the call (or, in general, of the distribution of the information) prevents, for example, undesired recording of the complete excerpt and/or acts of pure nuisance by the calling user, for example, unnecessary repetition of the same call and/or the same interrogation.

The diagram of the drawing shows a database, preferably of the multimedia type, generally indicated 13, which collects the information to be distributed to the users who access the system 10.

In general, the data-base 13 may hold many types of information such as, for example:
- written text,
- graphical information, possibly animated,
- sound information both at the level of spoken messages and at the level of musical messages, possibly correlated with the text or with the graphical information.

The content of this information can be very varied, for example, it may be: cultural, instructive, educational, relating to games or entertainments (video games), promotional, commercial (sales of products and services), journalistic, relating to clubs, technical/technological, relating to information technology, to banking, to statistical polls, to opinion polls and/or to competitions with prizes.

Multimedia databases of this type are currently supported on web sites accessible on the Internet. The criteria for setting them up may be considered widely known and such as not to require a detailed description herein. This also applies with regard to the possible provision of a user interface for enabling the user to identify and access information of various types selectively within the database, by a path selected freely by the user.

It will be appreciated, however, that use within a system according to the invention is generally simplified and much cheaper as a whole since it does not require the use of programming tools (HTML language, the provision of so-called "links" and/or "meta-tags", etc.) which are normally required for setting up web sites on the Internet.

The system 10 according to the invention may therefore be used in combination with a database 13 the characteristics of which are substantially comparable to those of the databases resident on CD-ROMS which have been available for some time, even at the level of publications which can be purchased at news-stands.

The operation of the database 13 and of the network interface 11 and/or of the timing function/functions 12, in coordinated manner, can easily be controlled by a processing unit of no great complexity such as, for example a personal computer 14 of the type currently available on the market.

Naturally, the ability of the user to explore the database 13 and also the type and quality of information which can be obtained are conditional upon the transmission facilities available to the user.

For example, whereas an advanced user having a personal computer (particularly if it has a sound-reproduction interface) can access the entire contents of the database 13, a user who calls the system 10, for example, simply by means of a telephone T can generally receive only sound data (voice and/or musical messages, usually limited to the telephone band) with the ability to explore the database correspondingly limited to the control messages which can be transmitted to the system 11 by means of a telephone (usually by operating the dial or keypad of the telephone).

Naturally, the principle of the invention remaining the same, the details of construction and forms of embodiment may be varied widely with respect to those described and illustrated, without thereby departing from the scope of the present invention.

## Claims

1. A communication system (10) for distributing information to a plurality of calling users (1, 2, ..., n) on respective call lines (L1, L2, .., Ln), **characterized in that** it comprises :
- a database (13) containing information to be distributed to the calling users (1, 2, ..., n), and
- a network interface (11) for enabling the calling users (1, 2, ...n) to access the database (13), the network interface being adapted to control the call lines (L1, L2, ...., Ln) on the basis of the criterion of charging the party called and having an associated timing module (12) for selectively controlling the time for which calling users (1, 2, ..., n) have access to the database (13).

2. A communication system according to Claim 1, **characterized in that** the timing module (12) is configured for performing at least one of the timing functions constituted by:
- limiting the period for which calling users (1, 2, ...n) have access to the database, and
- limiting the time bands in which the system (10) is activated.

3. A communication system according to Claim 1 or Claim 2, **characterized in that** the network interface is configured for controlling telephony telephone lines and/or data lines.

4. A system according to any one of Claims 1 to 3, **characterized in that** the database (13) is configured for containing information selected from the group constituted by:
- textual information,
- graphical information,
- animated graphical information,
- voice messages,
- sound signals such as musical signals, and
- coordinated combinations thereof.

## Patentansprüche

1. Kommunikationssystem (10) zur Verteilung von Informationen an eine Vielzahl von anrufenden Benutzern (1, 2, ..., n) über entsprechende Rufleitungen (L1, L2, ..., Ln), **dadurch gekennzeichnet, dass** es
- eine Datenbank (13), welche Informationen zur Verteilung an die anrufenden Benutzer (1, 2, ..., n) enthält, und
- eine Netzwerkschnittstelle (11), welche es den anrufenden Benutzern (1, 2, ..., n) ermöglicht, Zugriff auf die Datenbank (13) zu erhalten, wobei die Netzwerkschnittstelle geeignet ist, die Rufleitungen (L1, L2, ..., Ln) auf der Basis des Kriteriums zu überwachen, dass der Angerufe mit den Kosten belastet wird, und wobei die Netzwerkschnittstelle ein angeschlossenes Zeitmodul (12) für das selektive Kontrollieren der Zeitspanne aufweist, während der die anrufenden Benutzer (1, 2, ..., n) Zugriff auf die Datenbank (13) haben,
umfasst.

2. Kommunikationssystem nach Anspruch 1, **dadurch gekennzeichnet, dass** das Zeitmodul (12) für die Ausführung zumindest einer der folgenden Zeitfunktionen konfiguriert ist:
- Limitieren der Zeitspanne, über welche anrufende Benutzer (1, 2, ..., n) Zugriff auf die Datenbank haben, und
- Limitieren der Zeitdauer, in welcher das System (10) aktiviert ist.

3. Kommunikationssystem nach Anspruch 1 oder Anspruch 2, **dadurch gekennzeichnet, dass** die Netzwerkschnittstelle für das Überwachen telefonischer Leitungen und/oder Datenleitungen konfiguriert ist.

4. Ein System nach einem der Ansprüche 1 bis 3, **dadurch gekennzeichnet, dass** die Datenbank (13) konfiguriert ist, Informationen ausgewählt aus folgender Gruppe zu enthalten:
- Textinformation,
- grafische Information,
- animierte grafische Information,
- gesprochene Mitteilungen,
- Lautsignale wie Musiksignale und
- koordinierte Kombinationen davon.

## Revendications

1. Système de communication (10) pour distribuer des informations à une pluralité d'utilisateurs appelants (1, 2,..., n) sur des lignes d'appel respectives (L1, L2,..., Ln), **caractérisé en ce qu'**il comprend :
- une banque de données (13) contenant les informations devant être distribuées aux utilisateurs appelants (1, 2,..., n), et
- une interface de réseau (11) pour permettre aux utilisateurs appelants (1, 2,..., n) d'accéder à la banque de données (13), l'interface de réseau étant adaptée pour commander les lignes d'appel (L1, L2,..., Ln) sur la base d'un critère de coût imputé à la partie appelée et ayant un module de temporisation (12) associé pour commander de façon sélective le temps pendant lequel les utilisateurs appelants (1, 2,..., n) ont accès à la banque de données (13).

2. Système de communication selon la revendication 1, **caractérisé en ce que** le module de temporisation (12) est configuré pour assurer au moins une des fonctions de temporisation consistant à :
- limiter la période pendant laquelle les utilisateurs appelants (1, 2,..., n) ont accès à la banque de données, et
- limiter les zones horaires pendant lesquelles le système (10) est activé.

3. Système de communication selon la revendication 1 ou la revendication 2, **caractérisé en ce que** l'interface de réseau est configurée pour contrôler les lignes téléphoniques et/ou les lignes de données.

4. Système selon l'une quelconque des revendications 1 à 3, **caractérisé en ce que** la banque de données (13) est configurée pour renfermer des informations sélectionnées dans le groupe contenant :
- des informations textuelles,
- des informations graphiques,
- des informations graphiques animées,
- des messages vocaux,
- des signaux sonores comme des signaux musicaux, et
- des combinaisons coordonnées de ces derniers.
